# EUROPEAN PATENT SPECIFICATION

(11) **EP 0 476 753 B1**
(45) Date of publication and mention of the grant of the patent: **27.12.1995**
(21) Application number: 91202319.9
(22) Date of filing: 10.09.1991
(51) Int. Cl.: C08F 255/06, C08F 287/00

(54) **Process for manufacture of polymer compositions containing a polyvinylarene and EPDM rubber**
Verfahren zur Herstellung von Polymerzusammensetzungen mit einem Polyvinylaren- und einem EPDM-Kautschuk
Procédé de préparation de composition de polymères contenant une polyvinylarène et un caoutchouc EPDM

(30) Priority: 20.09.1990 GB 9020579
(43) Date of publication of application: 25.03.1992
(73) Proprietor: SHELL INTERNATIONALE RESEARCH MAATSCHAPPIJ B.V., 2596 HR Den Haag (NL)
(72) Inventor: Nelissen, Laurentius Nicolaas Ida Hubertus, NL-5612 AZ Eindhoven (NL); de Koning, Gerardus Johannes Maria, NL-5612 AZ Eindhoven (NL); Zijderveld, Johannes Maria, NL-4825 BG Breda (NL)

(56) References cited:
- FR-A- 2 256 935
- GB-A- 2 074 174
- US-A- 4 469 847

## Description

The invention relates to a process for the manufacture of compositions containing a polyvinylarene and EPDM rubber, and to polymer compositions obtained therewith. Vinylarene throughout the application means an aromatic compound to which at least one vinyl group is attached. EPDM rubbers are rubbers prepared from ethylene, propylene and a third copolymerizable monomer, a polycyclic diene.

More particularly the invention relates to a two stage process for the manufacture of polymer compositions containing a polyvinylarene and EPDM rubber, showing a fine stable interpenetrating network microstructure and attractive physical properties connected therewith.

From both GB-A-2,074,174 and US-A-4,469,847 a two stage polymerization process is known, for the manufacture of an impact resistant and weather resistant styrene polymer composition, which processes comprise mass polymerizing a solution of an EPDM rubber in styrenic monomer, optionally in the presence of a conjugated diene-styrene block copolymer to obtain a prepolymer, and thereafter suspending the mass prepolymer in water and suspension polymerizing the resultant material until complete conversion of monomers. Both processes have in common that during the first prepolymerization step phase inversion has already occurred. I.e., the polymerization system wherein originally the polystyrene solution represents the disperse phase, has transformed into a system with the rubber solution as disperse phase when the volume of the polystyrene phase and the volume of the rubber phase are about equal. This means that the second aqueous suspension polymerization step is always carried out after said phase inversion has taken place.

This occurrence of the phase inversion during the first mass polymerization step of these conventional processes can be derived from e.g. page 1, lines 63 and 64 and page 2, lines 1-4 of the British patent application, and from column 4, lines 22-24 of the US patent.

It will be appreciated that the polymer compositions obtained by the aforementioned conventional processes show a disperse rubbery phase having such coarse particles that the obtained blend can not be expanded.

Nonetheless, there is still a growing need for compositions containing a polyvinylarene, showing the physical characteristics which are required for modern high quality packaging foam materials. Object of the present invention is therefore to provide such high quality packaging foam materials aimed at, that contain polyvinylarene.

It has now been found that, in order to reach said high quality foams, showing an improved plasticity, enabling a plastic deformation of the foam before a tough fracture instead of a brittle fracture of the foam cell walls and providing such foam a significantly improved shock resistancy, the distribution and dimensions of the rubbery phase has to be such, that the rubber can be incorporated homogeneously in the cell walls of the foam.

As a result of extensive research and experimentation there has now surprisingly been found, that such high quality packaging foam materials aimed at, can be obtained by a process, comprising:
(a) dissolving in at least one vinylarene monomer of from 8 to 20% by weight, and preferably from 9 to 18% by weight, relative to the final composition, of at least one EPDM rubber, optionally mixed with a linear (hydrogenated) conjugated diene-vinylarene block copolymer, said block copolymer having a number average molecular weight in the range of from 10,000 to 1,000,000;
(b) prepolymerizing the obtained solution until a polymerization degree of from 0.01 to 25% provided the prepolymerization is stopped before phase inversion takes place;
(c) suspending the prepolymerized mass into an aqueous medium which contains at least one suspending agent; and
(d) suspension polymerizing until substantially complete monomer conversion is obtained, optionally in the presence of an expanding agent.

The EPDM rubber to be preferably applied has a specific density in the range of from 0.85 to 0.95 g/cm³, a Mooney viscosity (ML (1-4) 125 °C) in the range of from 30 to 80 and a polycyclic diene content in the range of from 2 to 10% by weight and preferably from 4 to 8% by weight.

With the term "polycyclic diene" as used throughout the present specification are meant dicyclopentadiene, norbornene and norbornene derivatives such as ethylidene norbornene which are known as common comonomers for EPDM rubbers.

Preferred EPDM rubbers used in the present process are those having a high polycyclic diene content, such as from 4 to 8% by weight which preferably is ethylidene norbornene. Preferred EPDM rubbers are the rubbers similar to, or sold as Keltan 312, Keltan 514, (trade marks, ex DSM), and more preferably (similar to) Keltan 514 (polycyclic diene content of approximately 8% by weight). In less critical applications, an EPR rubber, such as Keltan 740 or a similar grade, may be used instead of or together with the EPDM rubber.

Suitable vinylarene monomers within the process of the present invention are well-known in the art, and may be selected from any of the monomers styrene, α-methylstyrene, chlorostyrene, dimethylstyrene, and styrenic derivatives such as vinyltoluene. Preferably, the vinylarene is styrene, optionally mixed with minor amounts of any of the other vinylarenes.

Suitable linear block copolymers optionally added to the polymer composition in step (a) contain polymer blocks (A) and (B), wherein block (A) is derived from one substantially pure vinylarene or mixtures of copolymerizable vinylarenes or from mixtures of said vinylarene(s) and structurally different comonomer and more preferably a conjugated diene comonomer, in a relative minor amount, i.e. normally up to 20% by weight, and wherein block (B) is derived from one substantially pure conjugated diene or mixtures of copolymerizable conjugated dienes or from mixtures of said conjugated diene(s) and a structurally different comonomer, and more preferably a vinyl substituted aromatic monomer, respectively.

More suitably, the respective blocks are predominantly derived from (block (A)) styrene, optionally mixed with a comonomer selected from α-methylstyrene, chlorostyrene, dimethylstyrene, and styrenic derivatives such as vinyltoluene and/or minor amounts of 1,3-butadiene and/or isoprene and (block (B)) predominantly derived from 1,3-butadiene and/or isoprene, optionally mixed with minor amounts of one or more of the hereinbefore specified vinyl substituted aromatics, but preferably styrene, respectively. Block (B) most suitably has been hydrogenated after preparation of the complete block copolymer.

The linear block copolymer most suitably applied is a diblock copolymer, optionally mixed with minor amounts of linear triblock copolymers. When the aforementioned linear block copolymers are used, then they are preferably used in amounts in the range of from 0 to 5% by weight, calculated relative to the weight of the total composition.

This first polymerization stage of the process of the present invention was found to have to extend until a substantial conversion degree (5-23%) when EPDM rubber contents of 10% by weight or higher were to be applied, whereas this first polymerizion stage was found to be very short when lower EPDM rubber contents were applied.

The first polymerization stage of the process of the present invention, can be carried out in bulk with or without peroxidic initiator, but is preferably carried out without such initiator, i.e. by only thermal initiation.

In general, any substantial prepolymerization will normally be continued until at least after passing the critical tacky state in order to avoid the so-called "suspension failure".

It will be appreciated that due to the expected occurrence of said "suspension failure", a quite obvious process alternative, only comprising suspension polymerization of an EPDM rubber solution in e.g. styrene, was held inoperable by persons skilled in the art.

The EPDM rubber and optional block copolymer as specified hereinbefore, are added to the applied vinylarene and more preferably styrene and dissolved at a temperature of at most 50 °C under stirring, preceding to any substantial prepolymerization step.

After reaching a clear solution, it is heated to a temperature in the range of from 110 to 140 °C and more preferably of 130 °C to start a substantial prepolymerization.

During this prepolymerization step the reaction mixture becomes opaque and the viscosity increases significantly.

The conversion degree can be followed by means of a determination of solid residue after evaporation of the vinylarene and more particularly styrene.

After the prepolymerization step, the reaction mixture is suspended in an aqueous phase of a temperature in the range of from 10 to 80 °C, in a such a way that the volume ratio of the organic phase and aqueous phase is in the range from 1:3 to 4:3 and preferably about 2:3.

The aqueous phase contains one or more conventional suspending agents such as poly(vinyl alcohol), gelatine, agar, sodium salt of polyacrylic acid and polymethacrylic acid, polyethylene glycol, hydroxyethyl cellulose, carboxymethyl cellulose, methyl cellulose, polyvinylpyrrolidone, polyacrylamide and 1:1 copolymer of styrene and maleic anhydride and ethylene glycol or combinations thereof.

More particular examples are hydroxyethylcellulose Natrosol (trade mark), poly(vinyl alcohol) and colloid copolymers, such as copolymers of N-methylacetamide and 3-methylheptylacrylate or mixtures thereof. A preferred mixture is that one, containing 0.2% Natrosol, 0.1% poly(vinyl alcohol) and 0.2% by weight of a colloid copolymer of N-methyl acetamide and 3-methylheptylacrylate relative to the weight of the complete aqueous phase.

The suspending agents are used in the second polymerization stage in an amount in the range of from 0.1% to 0.6% by weight, relative to the weight of the aqueous phase.

Typical examples of polymerization peroxidic initiators to be used in one or both stages, but anyhow in the second stage of the process of the present invention, include decanoylperoxide, benzoylperoxide, laurylperoxide, octanoylperoxide, stearylperoxide, 3,5,5-trimethylhexanoylperoxide, tert-butylperbenzoate, tert-butylperacetate, tert-butylperpivalate; diisopropylbenzenehydroperoxide; 2,5-dimethyl-2,5-di-tert-butylperoxyhexane; di-tert-butylperoxide; cyclohexanone peroxide, dicumylperoxide, α,α'-azobisisobutyronitrile; tert-butylperoxyisobutyrate and tert-butylperoxylaurate or combinations thereof.

These radical forming initiators are preferably high temperature decomposing type catalysts or are used in the form of a combination of 2 or more catalysts, e.g. a combination of a low temperature decomposing type catalyst with a high temperature decomposing type.

Preferred combinations of the catalysts used include combinations of lauroylperoxide with dicumylperoxide; lauroylperoxide with di-tert-butylperoxide; lauroylperoxide with tert-butylperoxybenzoate; lauroylperoxide with 2,5-dimethyl-2,5-di-tert-butylperoxyhexane; lauroylperoxide with benzoylperoxide; 3,5,5-trimethylhexanoylperoxide with dicumylperoxide; 3,5,5-trimethylhexanoylperoxide with tert-butylperoxybenzoate; 3,5,5-trimethylhexanoylperoxide with benzoylperoxide; 3,5,5-trimethylhexanoylperoxide with di-tert-butylperoxide; tert-butylperoxypivalate with di-tert-butylperoxide; tert-butylperoxypivalate with dicumylperoxide; tert-butylperoxypivalate with tert-butyl peroxybenzoate; 2,4-dichlorobenzoylperoxide with tert-butylperoxybenzoate; 2,4-dichlorobenzoylperoxide with dicumylperoxide; 2,4-dichlorobenzoylperoxide with di-tert-butylperoxide; 2,4-dichlorobenzoylperoxide with 2,5-dimethyl-2,5-di-tert-butylhexane; octanoylperoxide with dicumylperoxide; octanoylperoxide with di-tert-butylperoxide, and benzoylperoxide with tert-butylperoxybenzoate.

In the present invention, the initiator is used in an amount suitable for polymerization of the vinylarene. For adequate practice of the present invention, the initiator is used in an amount of 0.01 to 1% by weight, preferably 0.3 to 0.7% by weight, based on the weight of the fed monomers.

The suspension polymerization step is carried out at temperatures in the range of from 80 to 140 °C and preferably from 90 to 130 °C, depending on the specific type of the peroxidic initiator.

It will be appreciated that another aspect of the present invention is formed by the polymer compositions in the form of expandable or non-expandable beads, obtainable by the hereinbefore described process, and which may be applied for the manufacture of shaped articles by e.g. injection moulding or extrusion and the like.

Therefore the hereinbefore specified process and more particularly the last stage of this process may be carried out in the presence of or without an expanding or blowing agent, such as halogenated hydrocarbons or lower alkanes such as pentane.

Expandable beads may be obtained as well by a (second) polymerization stage in the presence of a blowing agent or by the incorporation of a blowing agent into the beads after termination of the polymerization.

Accordingly the present invention is also relating to polymer compositions in the form of expandable or non-expandable beads, obtainable by the hereinbefore described process, which polymer compositions comprise:
(1) at least one EPDM rubber in an amount of from 8 to 20% and preferably in an amount of from 9 to 18% by weight, relative to the complete final compositions;
(2) a polymer of at least one vinylarene, preferably styrene, in an amount of from 67 to 85% by weight;
(3) optionally a linear (hydrogenated) conjugated diene-vinylarene block copolymer having a number average molecular weight in the range of from 10,000 to 1,000,000 in an amount of from 0 to 5% by weight; and
(4) optionally an expanding agent in an amount of from 0 to 8% by weight.

These compositions in bead form can be applied for the manufacture of shaped articles for packaging and such articles form another aspect of the present invention.

The compositions obtained according to the hereinbefore described process show very attractive properties and more particular an excellent shock resistance.

It is assumed that these characteristics can be attributed to the specific microstructure in these compositions obtainable due to the specific morphology fixation of the microstructure obtained before the occurrence of "phase inversion", and selection of specific amounts of the constituents (1) and (2).

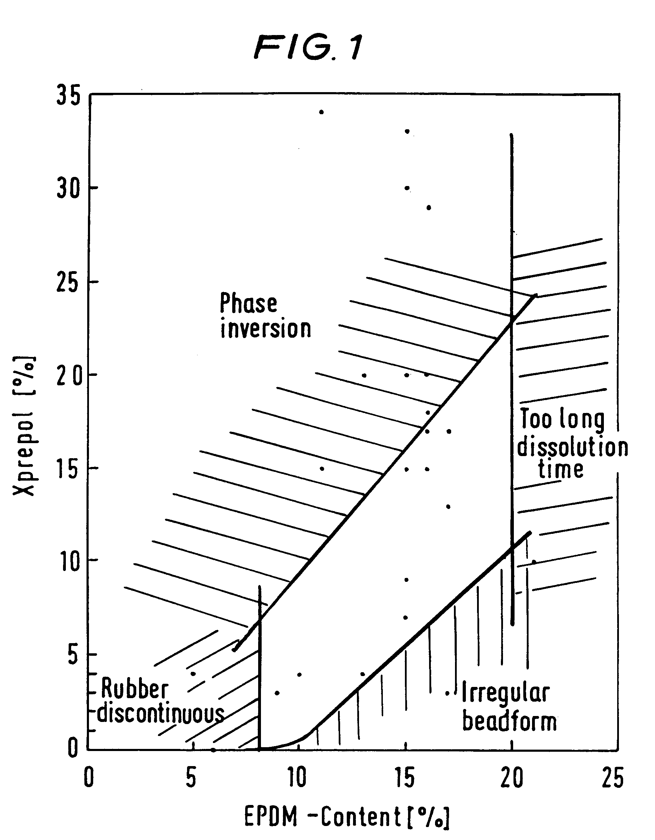

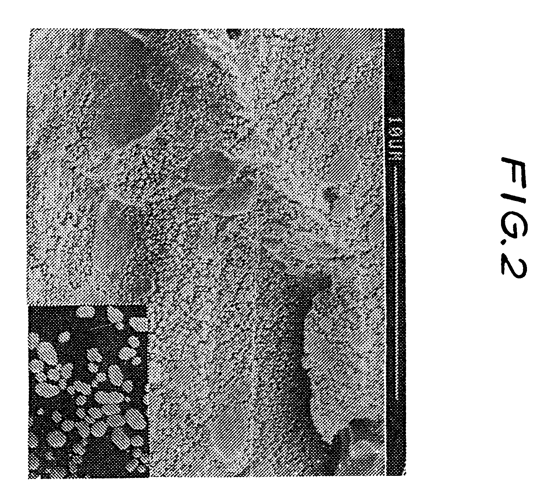

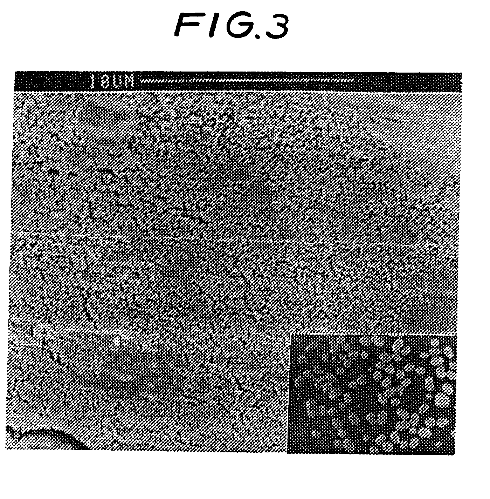

The respective most preferred conditions for the preparation of beads, showing an optimal spherical form and showing the aforementioned attractive properties, when using Keltan 514 have been depicted in the figure 1. The characteristic microstructure aimed at may be derived from the figures 2 and 3, relating to Scanning Electron Microscopy (SEM) of samples obtained according to the presently proposed process.

The invention is further illustrated by the following examples.

### EXAMPLE 1

In a 1-litre reactor 16 g EPDM rubber, containing 66% by weight of ethylene monomer and 8% by weight of ethylidene norbornene monomer (Keltan K 514, Keltan is a trade mark), and 4 g of a hydrogenated isoprene-styrene diblock copolymer (Kraton G 1701 X, Kraton is a trade mark) were dissolved in 80 g styrene monomer at a temperature of 40 °C under gentle stirring.

After obtaining a clear solution, it was heated up to 130 °C in order to start a prepolymerization. The reaction mixture soon coloured opaque and the viscosity increased significantly. The instantaneous conversion degree was determined by means of a solid analysis.

At a conversion degree of about 15%, the prepolymerisation was stopped and the reaction mixture was quickly suspended into an aqueous medium of room temperature which contained as suspending agents 0.2% by weight Natrosol (trade mark), 0.1% by weight poly(vinyl alcohol) (PVA), 0.2% by weight of colloid polymer of N-methyl acetamide and 3-methylheptylacrylate relative to the weight of the complete aqueous phase and polymerization catalyst tert-butylperoxybenzoate (0.2%) and dibenzoylperoxide 0.3% (relative to the weight of styrene).

The volume ratio of the organic phase and the aqueous phase was 2:3. The suspension was formed at a temperature of 70 °C and at a stirring speed of 600 rpm, using a stirrer having two slightly twisted blades of a size of 3.5 x 3 cm, whereas the reactor did not contain baffles.

Subsequently suspension polymerization was carried out under stirring at a speed of 300 rpm, whereas the temperature was kept constant at about 90 °C for 5 hours, was subsequently linearly increased over one hour to 120 °C and was kept constant at about 120 °C for 5 hours.

In order to produce foamable beads, pentane was added up to a pressure of 7 atm. after 6 hours from the start of suspension polymerization, in an amount of 8% by weight relative to the weight of styrene.

After about 11 hours, the reactor was cooled down and the spherical beads were filtered and washed with water until clear washings were obtained. They were subsequently dried at 40 °C during 20 hours.

### EXAMPLE 2

The procedure as described in Example 1 was repeated without the addition of pentane during the suspension polymerization, resulting in compact spherical beads.

### EXAMPLES 3-5

The procedure as described in Examples 1 and 2 were repeated, using instead of Keltan 514 the same amounts of Keltan 312, and Keltan 740.

### EXAMPLES 6 and 7

The procedure as described in Examples 1 and 2 were repeated, whereas the prepolymerization step was continued until conversion degrees of 17% and 13% respectively were obtained and the dissolved amounts of EPDM rubber were both 17% by weight respectively.

### EXAMPLES 8-10

The procedure as described in Examples 1 and 2 were repeated whereas the prepolymerization step was continued until conversion degrees of 15%, 9% and 7% respectively were reached, whereas the amount of EPDM rubber was 15% by weight.

### EXAMPLES 11 and 12

The procedure as described in Examples 1 and 2 were repeated whereas the prepolymerization step was continued until a conversion degree of 4% was reached, and the amounts of EPDM rubber were 10% and 13% respectively.

### EXAMPLE 13

The procedure as described in Examples 1 and 2 were repeated whereas the prepolymerization step was continued until a conversion degree of 3% was reached and the amount of EPDM rubber was 9% by weight.

### EXAMPLE 14

In a 5-litre autoclave 190 g EPDM rubber, containing 55% of ethylene monomer and 4% of ethylidene norbornene monomer (Keltan 312) and 22,5 g of a hydrogenated isoprene-styrene diblock copolymer (Kraton G 1701 X) were dissolved in 1900 g styrene monomer at a temperature of 40 °C under gentle stirring. After prepolymerization at 120 °C during about 0.5 hr, the rubber-solution was suspended into an aqueous medium of room temperature which contained as suspending agent 0.15% by weight Natrosol, and 0.15% by weight polyvinylalcohol and polymerisation initiator tert-butylperoxybenzoaat (0.18%) and dibenzoylperoxyde (0.35%) (relative to the weight of styrene).

The volume ratio of organic phase to the aqueous phase was 1:1. The suspension was formed at a temperature of 70 °C and a stirring speed of 425 rpm, using a stirrer having two slightly twisted blades of a size of 6 x 4 cm.

Subsequently suspension polymerisation was carried out under stirring speed of 425 rpm, whereas the temperature was kept constant at 90 °C for 5 hours and at 120 °C for 5 hours.

### EXAMPLES 15-16

The procedure as described in Example 14 was repeated using amounts of EPDM-rubber of 8 and 10% and amounts of blockcopolymer 1.4% and 1.7% respectively.

### EXAMPLES 17

The procedure are described in Example 14 was repeated using 0.10% poly(vinyl alcohol) and no addition of Natrosol.

Of all the compositions prepared according to Example 1-17, a co-continuous EPDM phase could be detected by means of Scanning Electron Microscopy (SEM), revealing that the rubber phase was indeed completely incorporated in the cell-walls of the foamed particles.

Also the mechanical properties of compact compositions, prepared according to the process of the invention, were tested by means injection moulded dumb bell shaped test bars of which the morphology was also studied by means of SEM. These injection moulded test bars showed a deformed, but intact co-continuous rubber phase.

### Comparative Example

In a 5-litre autoclave 130 g EPDM rubber, containing 55% of ethylene monomer and 4% of ethylidene norbornene monomer (Keltan 312) and 22,5 g of a hydrogenated isoprene-styrene diblock copolymer (Kraton G 1701 X) were dissolved in 1900 g styrene monomer at a temperature of 40 °C under gentle stirring.

The rubber-solution was directly suspended into an aqueous medium of room temperature which contained as suspending agent 0.15% by weight Natrosol, and 0.15% by weight polyvinylalcohol and polymerisation initiator tert-butylperoxybenzoaat (0.18%) and dibenzoylperoxyde (0.35%) (relative to the weight of styrene).

The volume ratio of organic phase to the aqueous phase was 1:1. The suspension was formed at a temperature of 70 °C and a stirring speed of 425 rpm, using a stirrer having two slightly twisted blades of a size of 6 x 4 cm.

Subsequently suspension polymerisation was carried out under stirring speed of 425 rpm, whereas the temperature was kept constant at 90 °C for 5 hours and at 120 °C for 5 hours.
The co-continuous EPDM phase aimed at could not be detected by means of SEM in the beads obtained, whereas also mechanical properties of compact compositions were found to be significantly less attractive.

## Claims

1. A process for the manufacture of polymer compositions containing a polyvinylarene and EPDM rubber, which process comprises:
(a) dissolving in at least one vinylarene monomer of from 8 to 20% by weight, and preferably from 9 to 18% by weight, relative to the final composition, of at least one EPDM rubber, optionally mixed with a linear (hydrogenated) conjugated diene-vinylarene block copolymer, said block copolymer having a number average molecular weight in the range of from 10,000 to 1,000,000;
(b) prepolymerizing the obtained solution until a polymerization degree of from 0.01 to 25%, provided the prepolymerization is stopped before phase inversion takes place;
(c) suspending the prepolymerized mass into an aqueous medium which contains at least one suspending agent; and
(d) suspension polymerizing until substantially complete monomer conversion is obtained, optionally in the presence of an expanding agent.

2. A process according to claim 1, characterized in that an EPDM rubber is applied, having a specific density in the range of from 0.85 to 0.95 g/cm³, a Mooney viscosity (ML (1-4), 125 °C) in the range of from 30 to 80 and a polycyclic diene content in the range of from 2 to 10% by weight and preferably from 4 to 8% by weight.

3. A process according to claims 1 and 2, characterized in that EPDM rubber is mixed with a linear (hydrogenated) conjugated diene-vinylarene diblock copolymer.

4. A process according to claim 3, characterized in that a hydrogenated butadiene-styrene diblock copolymer is used.

5. A process according to claims 1-4, characterized in that the block copolymers are used in amounts in the range of from 0 to 5% by weight, calculated relative to the weight of the total composition.

6. A process according to claim 1, characterized in that the solution of step (a), containing at least 10 % by weight of at least one EPDM rubber is prepolymerized in step (b) until a conversion degree of from 5 to 23% is reached.

7. A process according to claims 1-6, characterized in that the EPDM rubber and optional block copolymer are added to the applied vinylarene and dissolved at a temperature of at most 50 °C and after reaching a clear solution, it is heated to a temperature in the range of from 110 to 140 °C.

8. Process according to claims 1-7, characterized in that after the prepolymerization step, the reaction mixture is suspended in an aqueous phase of a temperature in the range of from 10 to 80 °C and that the volume ratio of the organic phase and aqueous phase is in the range from 1:3 to 4:3 and preferably 2:3.

9. Process according to claims 1-8, characterized in that the aqueous phase contains as suspending agents hydroxyethyl cellulose, poly(vinyl alcohol) and colloid copolymers or mixtures thereof.

10. Process according to claim 9, characterized in that a mixture is used, consisting of 0.2% by weight hydroxyethyl cellulose, 0.1% by weight poly(vinyl alcohol) and 0.2% by weight of a colloid copolymer of N-methyl acetamide and 3-methyl heptyl acrylate.

11. Process according to claims 1-10, characterized in that the suspension polymerization step is carried out at temperatures in the range of from 80 to 140 °C and preferably from 90 to 130 °C.

12. Polymer compositions in the form of expandable or non-expandable beads, obtainable by a process according to claims 1-11, which comprise:
(1) at least one EPDM rubber in an amount of from 8 to 20% and preferably in an amount of from 9 to 18% by weight, relative to the complete final compositions;
(2) a polymer of at least one vinylarene, preferably styrene, in an amount of from 67 to 85% by weight;
(3) optionally a linear (hydrogenated) conjugated diene-vinylarene block copolymer having a number average molecular weight in the range of from 10,000 to 1,000,000 in an amount of from 0 to 5% by weight; and
(4) optionally an expanding agent in an amount of from 0 to 8% by weight.

13. Use of polymer compositions according to claim 12 for the manufacture of shaped articles for packaging.

14. Shaped articles for packaging derived from polymer compositions according to claim 12.

## Patentansprüche

1. Verfahren zur Herstellung von Polymerzusammensetzungen mit einem Polyvinylaren und einem EPDM-Kautschuk, dadurch gekennzeichnet, daß man
(a) in mindestens einem Vinylarenmonomer 8 bis 20 Gew.-% und vorzugsweise 9 bis 18 Gew.-%, bezogen auf die Endzusammensetzung, mindestens eines EPDM-Kautschuks löst, der gegebenenfalls mit einem linearen (hydrierten) Blockcopolymer aus konjugiertem Dien und Vinylaren vermischt ist, wobei das Blockcopolymer ein zahlenmittleres Molekulargewicht im Bereich von 10 000 bis 1 000 000 aufweist,
(b) die erhaltene Lösung bis zu einem Polymerisationsgrad von 0,01 bis 25% präpolymerisiert, unter der Voraussetzung, daß man das Präpolymerisieren beendet, bevor eine Phasenumkehr stattfindet,
(c) die präpolymerisierte Masse in einem wäßrigen Medium, das mindestens ein Suspensionshilfsmittel enthält, suspendiert, und
(d) bis zum Erreichen eines weitgehend vollständigen Monomerenumsatzes, gegebenenfalls in Gegenwart eines Blähmittels, eine Suspensionspolymerisation durchführt.

2. Verfahren nach Anspruch 1, dadurch gekennzeichnet, daß man einen EPDM-Kautschuk verwendet, der eine spezifische Dichte im Bereich von 0,85 bis 0,95 g/cm³, eine Mooney-Viskosität (ML (1-4), 125°C) im Bereich von 30 bis 80 und einen Gehalt an polycyclischem Dien im Bereich von 2 bis 10 Gew.-%, vorzugsweise im Bereich von 4 bis 8 Gew.-%, aufweist.

3. Verfahren nach den Ansprüchen 1 und 2, dadurch gekennzeichnet, daß man EPDM-Kautschuk mit einem linearen (hydrierten) Diblockcopolymer aus einem konjuierten Dien und einem Vinylaren vermischt.

4. Verfahren nach Anspruch 3, dadurch gekennzeichnet, daß man ein hydriertes Butadien-Styrol-Diblockcopolymer verwendet.

5. Verfahren nach den Ansprüchen 1-4, dadurch gekennzeichnet, daß man die Blockcopolymere in Mengen im Bereich von 0 bis 5 Gew.-%, bezogen auf das Gewicht der Gesamtzusammensetzung, verwendet.

6. Verfahren nach Anspruch 1, dadurch gekennzeichnet, daß man die mindestens 10 Gew.-% mindestens eines EPDM-Kautschuks enthaltende Lösung aus dem Verfahrensschritt (a) in dem Verfahrensschritt (b) präpolymerisiert, bis ein Umsetzungsgrad von 5 bis 23% erreicht ist.

7. Verfahren nach den Ansprüchen 1-6, dadurch gekennzeichnet, daß man dem verwendeten Vinylaren den EPDM-Kautschuk und gegebenenfalls das Blockcopolymer zusetzt und sie bei einer Temperatur von höchstens 50°C löst, und daß man die Lösung, nachdem sie klar geworden ist, auf eine Temperatur im Bereich von 110 bis 140°C erhitzt.

8. Verfahren nach den Ansprüchen 1-7, dadurch gekennzeichnet, daß man das Reaktionsgemisch nach dem Präpolymerisationsschritt in einer wäßrigen Phase suspendiert, welche eine Temperatur im Bereich von 10 bis 80°C aufweist, und daß das Volumenverhältnis der organischen und der wäßrigen Phase im Bereich von 1:3 bis 4:3 liegt und vorzugsweise 2:3 beträgt.

9. Verfahren nach den Ansprüchen 1-8, dadurch gekennzeichnet, daß die wäßrige Phase als Suspensionshilfsmittel Hydroxyethylcellulose, Poly(vinylalkohol) und kolloidale Copolymere oder Mischungen daraus enthält.

10. Verfahren nach Anspruch 9, dadurch gekennzeichnet, daß man eine Mischung verwendet, die zu 0,2 Gew.-% aus Hydroxyethylcellulose, zu 0,1 Gew.-% aus Poly(vinylalkohol) und zu 0,2 Gew.-% aus einem kolloidalen Copolymer aus N-Methylacetamid und 3-Methylheptylacrylat besteht.

11. Verfahren nach den Ansprüchen 1-10, dadurch gekennzeichnet, daß man den Suspensionspolymerisationsschritt bei Temperaturen im Bereich von 80 bis 140°C und vorzugsweise im Bereich von 90 bis 130°C durchführt.

12. Polymerzusammensetzungen in Form von schäumbaren oder nicht-schäumbaren Perlen, erhältlich durch ein Verfahren nach den Ansprüchen 1-11 und enthaltend
(1) mindestens einen EPDM-Kautschuk in einer Menge von 8 bis 20 Gew.-% und vorzugsweise in einer Menge von 9 bis 18 Gew.-%, bezogen auf die vollständigen Endzusammensetzungen,
(2) ein Polymer aus mindestens einem Vinylaren, vorzugsweise Styrol, in einer Menge von 67 bis 85 Gew.-%,
(3) gegebenenfalls ein lineares (hydriertes) Blockcopolymer aus konjugiertem Dien und Vinylaren, mit einem zahlenmittleren Molekulargewicht im Bereich von 10 000 bis 1 000 000, in einer Menge von 0 bis 5 Gew.-%, und
(4) gegebenenfalls ein Blähmittel in einer Menge von 0 bis 8 Gew.-%.

13. Verwendung von Polymerzusammensetzungen nach Anspruch 12 zur Herstellung von Formkörpern für Verpackungen.

14. Aus Polymerzusammensetzungen nach Anspruch 12 gewonnene Formkörper für Verpackungen.

## Revendications

1. Procédé de fabrication de compositions contenant un polyvinylarène et un caoutchouc d'EPDM, caractérisé en ce que :
(a) on dissout dans au moins un monomère vinylarénique de 8 à 20% en poids et, de préférence, de 9 à 18% en poids, par rapport à la composition finale, d'au moins un caoutchouc d'EPDM, éventuellement mélangé à un copolymère séquencé de vinylarène-diène conjugué (hydrogéné) linéaire, ledit copolymère séquencé possédant un poids moléculaire moyen en nombre qui varie de 10.000 à 1.000.000,
(b) on prépolymérise la solution obtenue jusqu'à un degré de polymérisation de 0,01 à 25%, pour autant que la polymérisation soit arrêtée avant que l'inversion de phases se produise,
(c) on met la masse prépolymérisée en suspension dans un milieu aqueux qui contient au moins un agent de mise en suspension et
(d) on polymérise la suspension jusqu'à ce que l'on parvienne à une conversion du monomère sensiblement complète, éventuellement en présence d'un agent d'expansion.

2. Procédé suivant la revendication 1, caractérisé en ce que l'on applique un caoutchouc d'EPDM possédant une masse spécifique qui varie de 0,85 à 0,95 g/cm³, une viscosité Mooney (ML (1-4) 125°C), dans la plage de 30 à 80 et une teneur en diène polycyclique qui fluctue de 2 à 10% en poids et, de préférence, de 4 à 8% en poids.

3. Procédé suivant l'une quelconque des revendications 1 et 2, caractérisé en ce que l'on mélange le caoutchouc d'EPDM à un copolymère biséquencé de vinylarène-diène conjugué (hydrogéné) linéaire.

4. Procédé suivant la revendication 3, caractérisé en ce que l'on utilise un copolymère biséquencé de styrène-butadiène hydrogéné.

5. Procédé suivant l'une quelconque des revendications 1 à 4, caractérisé en ce que l'on utilise les copolymères séquencés en proportions qui varient de 0 à 5% en poids, calculées par rapport au poids de la composition totale.

6. Procédé suivant la revendication 1, caractérisé en ce que l'on prépolymérise la solution de l'étape (a), contenant au moins 10% en poids d'au moins un caoutchouc d'EPDM, au cours de l'étape (b) jusqu'à atteindre un degré de conversion de 5 à 23%.

7. Procédé suivant l'une quelconque des revendications 1 à 6, caractérisé en ce que le caoutchouc d'EPDM et l'éventuel copolymère séquencé sont ajoutés au vinylarène appliqué et dissous à une température d'au maximum 50°C et, après avoir atteint le stade d'une solution limpide ou claire, on chauffe le tout jusqu'à une température qui varie de 110 à 140°C.

8. Procédé suivant l'une quelconque des revendications 1 à 7, caractérisé en ce que, après l'étape de prépolymérisation, on met le mélange de réaction en suspension dans une phase aqueuse à une température qui varie de 10 à 80°C et en ce que le rapport volumique de la phase organique à la phase aqueuse varie de 1:3 à 4:3 et est, de préférence, de 2:3.

9. Procédé suivant l'une quelconque des revendications 1 à 8, caractérisé en ce que la phase aqueuse contient, à titre d'agents de mise en suspension, de l'hydroxyéthylcellulose, du poly(alcool vinylique) et des copolymères colloïdaux, ou leurs mélanges.

10. Procédé suivant la revendication 9, caractérisé en ce que l'on utilise un mélange constitué de 0,2% en poids d'hydroxyéthylcellulose, 0,1% en poids de poly(alcool vinylique) et 0,2% en poids d'un copolymère colloïdal de N-méthylacétamide et d'acrylate de 3-méthylheptyle.

11. Procédé suivant l'une quelconque des revendications 1 à 10, caractérisé en ce que l'on entreprend l'étape de polymérisation en suspension à des températures qui varient de 80 à 140°C et, de préférence, de 90 à 130°C.

12. Compositions de polymères qui se présentent sous la forme de perles expansibles ou non expansibles, que l'on peut obtenir par un procédé suivant l'une quelconque des revendications 1-11, caractérisé en ce que :
(1) au moins un caoutchouc d'EPDM en une proportion de 8 à 20% en poids et, de préférence, en une proportion de 9 à 18% en poids, par rapport à la composition finale,
(2) un polymère d'au moins un vinylarène, de préférence le styrène, en une proportion de 67 à 85% en poids,
(3) éventuellement un copolymère séquencé de vinylarènediène conjugué (hydrogéné) linéaire, possédant un poids moléculaire moyen en nombre qui varie de 10.000 à 1.000.000, en une proportion de 0 à 5% en poids et
(4) éventuellement un agent d'expansion en une quantité de 0 à 8% en poids.

13. Utilisation des compostions de polymères suivant la revendication 12 en vue de la fabrication d'articles moulés destinés à l'emballage.

14. Articles moulés destinés à l'emballage obtenus à partir de compositions de polymères suivant la revendication 12.
